# EUROPEAN PATENT SPECIFICATION

(11) **EP 1 842 758 B1**
(45) Date of publication and mention of the grant of the patent: **02.09.2009**
(21) Application number: 06007048.9
(22) Date of filing: 03.04.2006
(51) Int. Cl.: B60W 20/00, G01C 21/34

(54) **Route determination for a hybrid vehicle and system therefor**
Routenbestimmung für ein Hybridfahrzeug und zugehöriges System
Détermination d'itineriare pour un véhicule hybride et système associé

(43) Date of publication of application: 10.10.2007
(73) Proprietor: Harman Becker Automotive Systems GmbH, 76307 Karlsbad (DE)
(72) Inventor: Schirmer, Hartmut, 25421 Pinneberg (DE)
(74) Representative: Bertsch, Florian Oliver

(56) References cited:
- DE-C1- 19 605 458
- DE-C1- 19 831 487
- US-A- 5 627 752
- US-A- 5 790 976
- US-A- 5 815 824
- US-A- 5 832 396
- US-A- 5 892 346
- US-A1- 2002 069 000
- US-A1- 2002 188 387

## Description

This invention relates to a method for determining a route for a hybrid vehicle and to a system for controlling a hybrid vehicle.

### Related Art

The need to reduce fossil fuel consumption in vehicles predominantly powered by internal combustion engines is well-known. Vehicles powered by electric motors attempt to address these needs. Another path to meeting these fuel economy goals is through the use of hybrid vehicles. These hybrid vehicles have two different driving mechanisms. Mostly one driving mechanism uses an internal combustion engine and another driving mechanism uses an electric motor or fuel cells. Additionally, the use of gas motors in vehicles is known.

Recently, the use of hybrid electric vehicles has become a promising tool for the design of vehicles having a reduced fuel consumption. These electric hybrid vehicles have a gasoline-based engine as used in nowadays vehicles, an electric motor, a regenerative breaking system capturing the energy that is normally lost when a break of a vehicle is activated. Additionally, a battery pack is provided, the function of which is to store electrical energy for the electric motor. In these hybrid electric vehicles the driving mechanism is either based on the gasoline engine, the electric motor or on both driving mechanisms.

Additionally, systems are known in which, when the route to a predetermined destination is known the use of the different driving mechanisms is controlled in such a way that the fuel consumption is minimized. By way of example US2002/0188387 A1 discloses an onboard navigation system providing energy management for an electrical vehicle and a hybrid electrical vehicle. When the route to a predetermined destination is known, it can be determined whether parts of the route can be used for recharging the battery pack, such as in downhill passages of the route or in stop and go traffic. The expectations of the driver demand can be determined when the route is known and the use of the different driving mechanisms can be determined depending on the determined route.

US2002/0069000 A1 discloses an apparatus for controlling a hybrid electrical vehicle in which a rechargeable battery is discharged and recharged with regenerative breaking the discharge of the battery and therefore the use of the electric motor is controlled in dependence on the upcoming route.

These known systems determine a route first and then control the use of the different driving mechanisms for the determined route. However, these systems do not take into account the present resource status of the vehicle. By way of example, depending on the present resource status of the vehicle, there may exist different optimum routes to a predetermined destination. For hybrid vehicles the resource status is an important factor for at least some of the driving mechanisms. For some of the driving mechanisms such as the gasoline engine it may be easy to refill the resources (e.g. at a gasoline station), however, for other driving mechanisms such as a gas-based engine or an electric motor the fact how much energy resources this motor has is a crucial factor for the determination which route should be taken and which driving mechanism should be used for the route. Accordingly, a need exists to adapt the route calculation to the current operating status of the vehicle.

US 5,790,976 discloses a route finder device for a motor vehicle containing a data input unit for inputting one or more destinations for a journey, a road network memory for storing the locations on the network of roads which may be used by the vehicle, a computer unit for determining one or more possible routes from the location to the destination including energy supply processes which may be required at energy supply locations as a function of the quantity of energy present in the energy accumulator, and a display unit for displaying the routes determined by the computer unit. When used in electric vehicles, this device permits optimum routes to be found, taking into account charging processes for the traction battery.

US 2002/0188387 A1 discloses an on-board navigation system to provide energy management for a hybrid electric vehicle. The hybrid electric vehicle control strategy accommodates the goals of fuel economy while meeting driver demand for power and maintaining the functionality of the traction motor battery system using battery parameter controllers. A vehicle system controller tightly integrates the navigation system information with energy management while en route to a known destination.

US 2002/0069000 A1 discloses an apparatus for controlling a hybrid electric vehicle in which a rechargeable battery is discharged to drive an electric motor and is charged with regenerative electric power from the electric motor. The apparatus comprises a car navigation apparatus for outputting route information on a route to a destination of the vehicle including height information, and a control section for controlling charging and discharging of the rechargeable battery. The control section controls high discharge without power assist limit before a downhill travel path of the route based on the route information output from the car navigation apparatus.

US 5,815,824 discloses a navigation system suitable for hybrid electric automobiles. A destination, to which one wants to drive, is inputted as drive plan information. Based on a distance planned to be driven by the automobile to the destination and a remaining capacity of the battery determined by the remaining capacity detector, it is determined whether the automobile can reach the destination with the remaining capacity of the battery.

### Summary of the invention

The present invention provides a method for determining a route for a hybrid vehicle as defined in claim 1 and a system for controlling a hybrid vehicle as defined in claim 17. In the dependent claims preferred embodiments of the invention are described.

According to a first aspect of the invention, a method is provided for determining a route for a hybrid vehicle, the hybrid vehicle having at least two different driving mechanisms for driving the vehicle. According to a first step, the resource status of at least one of said at least two different driving mechanisms is determined. In addition to the resource status the destination location for the vehicle is determined. When the resource status and the destination location is known, a route is determined to said predetermined destination location together with the use of the different driving mechanisms taking into account the resource status determined before. According to the invention, the optimum route to the destination in combination with the optimized use of the different driving mechanisms can be determined when the resource status is used as another input variable for the route determination. In certain situations it may happen that a first route cannot be used in view of the determined resource status, whereas this route to the destination location would be used if the resource status of the hybrid vehicle did not influence the route determination.

When the route to the destination location is determined taking into account the resource status, the use of the different driving mechanisms is also determined in such a way that for the different parts of the route it is determined which driving mechanism or which driving mechanisms are used for driving the vehicle. In addition to that the switching point from one driving mechanism to the other driving mechanism or from one driving mechanism to both driving mechanisms or from both driving mechanisms to one driving mechanism is also determined for the route. Once the resource status and the destination location are known, it can be determined in advance which driving mechanism is used for the different parts of the route. Additionally, according to another embodiment of the invention, the driving mechanisms can be controlled in such a way that during driving, the driving mechanisms are switched at the predetermined switching points. Preferably, the switching points and the use of the different driving mechanisms are determined in such a way that, when an internal combustion engine is used as one driving mechanism, its fuel consumption is minimized. In the present context different driving mechanisms can be a gasoline engine, a diesel engine, a gas engine, an electric motor or a hydrogen driven motor. It should be understood that other driving mechanisms are possible.

According to a preferred embodiment, the resource status is determined for at least one driving mechanism, this driving mechanism not being the gasoline or a diesel engine. Normally, gas stations in which a fuel refilling can be carried out are widely spread. However, for some other driving mechanisms such as a gas motor or an electric motor or a hydrogen driven motor, the locations at which a battery can be recharged in case of an electric motor or in which the gas tank can be refilled are much less common. According to the invention, the resource status is determined for the driving mechanism, for which it is less easier to fill the tank. When one driving mechanism is an electric motor, the step of determining the resource status comprises the step of determining the charge status of the battery storing the electric energy for the electric motor. When the electric motor is used together with a fuel combustion engine, the charge status of the battery is an important factor. Only when the electric motor is used instead of the fuel combustion engine can the overall fuel consumption be minimized.

The electric motor, which is also a zero emission motor, also plays an important role especially in urban agglomerations. The driver may want to control the vehicle in such a way that for different geographical regions a certain driving mechanism is used. By way of example, the driver may wish to use the zero emission motor such as the electric motor for a certain geographical area, such as the city or the village the driver lives in. In this context the driving mechanism preferences is determined, if any, the route to the predetermined destination and the use of the different driving mechanisms being determined taking into account the driving mechanism preferences. Recently, the use of driving mechanism constraints has also been discussed. By way of example it may be possible that the use of fuel combustion engines may be prohibited for a certain geographical region, such as a downtown area. In this context it is possible to determine the driving mechanism constraints existing for geographical regions through which the selected route is going. The route to the destination and the use of the different driving mechanisms is then determined in such a way that the driving mechanism constraints are met. If for a certain part of the route the use of an internal combustion engine is not allowed, the route has to be determined in such a way that, in view of the resource status, the driving mechanisms are controlled in such a way that for the part of the route where the constraints exist, the driving mechanism is used which meets the constraints. By way of example, if the zero emission driving mechanism is an electric motor, the resource status of the battery has to be in the position to drive the vehicle through the geographical region having the above-mentioned constraint. When the geographical region is known, the battery can also be recharged in such a way that when the geographical region is entered having the constraint, the battery is at the maximum storage level.

The driving mechanism constraints may also depend on time. In case of heavy smog, the responsible authority may determine that certain driving mechanisms are not allowed for predetermined geographical regions. By way of example, these driving mechanism constraints may be received using a wireless communication system. According to one example, the driving mechanism constraints may be part of the information sent together with radio program signals. One possibility is the provision of these constraint information in the traffic message channel (TMC). If such a constraint is received for a predetermined geographical region, the actual position of the vehicle may be determined and the user of the vehicle may be informed of the new driving mechanism constraints. Furthermore when the driving mechanism constraints are known, the driving mechanism is automatically determined in such a way that the driving mechanism constraints are met. It should be understood that the above-described example also applies to driving mechanism preferences input by the user. When the user has determined in advance that in a certain geographical region a certain driving mechanism should be used, the user can either be informed that now the preferred driving mechanism should be selected, or the respective driving mechanism can also be selected automatically.

Additionally, according to the invention, it is determined whether, in view of the determined resource status, a route can be calculated at all, meeting the driving mechanism constraints or preferences. If such a route meeting the driving mechanism or preferences cannot be calculated, the user may be informed. The user may then have to select another route which is not going through the region having the driving mechanism constraint.

According to another embodiment of the invention, a minimum resource level for at least one of the driving mechanisms may be determined. Preferably, the minimum resource level is determined for the driving mechanism for which the refilling of the resources is more difficult. The use of the different driving mechanisms and the switching locations for the determined route can then be determined in such a way that the resource level for said at least one driving mechanism does not fall under said minimum resource level. When an electric motor is used, the driving mechanisms can be controlled in such a way that a predetermined minimum battery power is always available. When this minimum level is reached, the system may change to the other driving mechanism.

When the resource status and the route to the predetermined destination location is known, it is possible to predict the resource status of the different driving mechanisms for the complete route. In this case, during traveling it can be verified whether, depending on the position, the resource status corresponds to the predicted resource status. If the resource status differs from the predicted resource status by a predetermined amount, the use of the different driving mechanisms and the switching locations can be recalculated for the remaining part of the route. It can happen that more regenerative breaking energy can be stored in the battery pack of the vehicle in case of an electric motor then predicted, as, by way of example, the vehicle had to break more often due to the traffic situation. In this case, the controlling of the driving mechanisms can be adapted accordingly so that the electric motor is used, taking into account the adapted energy reservoir.

For predicting the resource status and for predicting the switching locations it is also possible to take into consideration known driving patterns of the driver. By way of example, the driver may be a person who normally drives in a very resource-saving way. This means that the driver does normally not accelerate too fast and changes the velocity in a rather soft way. There exist also other drivers which normally accelerate very fast and which drive in a less resource-saving way. It is possible to consider known driving patterns of the driver which might have been recorded during driving. The fact how much the driver is using the driving resource in a resource-saving way influences the prediction of the driving resources for the different parts of the route. Accordingly, according to another aspect of the invention, driving patterns of the driver may be determined and these driving patterns may be used for predicting the use of the different driving mechanisms for the different parts of the route. According to this aspect of the invention, it is determined whether the driver is driving in a resource-saving way or not. The driving mechanism status and the switching location can then be adapted to the fact whether the driver uses a resource-saving way of driving or not. This can improve the prediction of the resource status and the switching locations. The driving mechanism pattern can be determined by taking into account former routes of the driver. If the vehicle has used the same route several times, the system may know how the driver normally drives. Additionally, it is possible to consider any other routes the driver has used before in order to determine the driving behavior of the driver.

As mentioned above, the regenerative breaking energy depends on the fact how often the break is activated and for how long the break is activated. Accordingly, the use of an electric motor in a hybrid vehicle also depends on the traffic situation. According to one embodiment of the invention, the system can receive the traffic information and can determine the driving mechanism based on the traffic information. By way of example, on highways having little traffic, the electric motor will probably be used less often than on a crowded highway on which the vehicle is moving with stop and go. This traffic information can then be used for determining the route and the use of the different driving mechanisms.

Often there exist other preset conditions which have to be considered when a route is calculated. The user may select the fastest route, the cheapest route, the route avoiding toll roads, etc. When the route to the predetermined destination location is calculated taking into account the resource status, a preset condition can also be determined as another variable, the route being calculated additionally taking into account said preset condition, such as fastest route, shortest route, etc.

Another aspect which can be considered for calculating a route to a destination for a hybrid vehicle is whether at the destination location there exists a possibility of refilling the resource for at least one of the driving mechanisms. The use of the different driving mechanisms is then controlled in such way that the resource status of the driving mechanism for which a refilling possibility exists at the destination location is controlled in such a way that a minimum resource level is attained at the destination location. In case of an electric motor the battery storing the electric energy can be discharged nearly completely, as the system knows that at the destination location a recharging possibility exists. For hybrid vehicles using electric motors a recharge possibility on the route to the predetermined destination might not be considered as very helpful, as normally the recharging period for an electric battery is much longer than the time period normally needed at a gas station. The driver may not want to wait during his journey to recharge the vehicle. Accordingly, the use of the electric motor may also depend on the fact whether the battery can be fully recharged at the destination location.

The invention further relates to a system for controlling a hybrid vehicle, the system comprising a resource determination unit for determining the resource status of at least one of said two different driving mechanisms. Additionally, a position-detecting unit is provided calculating the present position of the vehicle. A route determination unit determines the route to a predetermined destination and a driving mechanism control unit determines the use of the different driving mechanisms and the switching locations for changing the driving mechanisms for said route in accordance with the determined resource status. This system works as described above.

These other advantages of the invention will become apparent to those skilled in the art upon reading and understanding the following detailed description with reference to the accompanying figures.

### Brief description of the drawings

Figure 1 is a block diagram showing a schematic configuration of a system for controlling a hybrid vehicle;
Figure 2 is a flow chart showing the steps for controlling the route determination and the use of the driving mechanisms in view of the resource status;
Figure 3 shows a part of a route for which driving constraints exist;
Figure 4 shows a flow chart of another embodiment for determining a route for a hybrid vehicle and for determining the different driving mechanisms; and
Figure 5 shows a flow chart with the steps taking into account driving mechanism constraints.

### Detailed description of the preferred embodiment

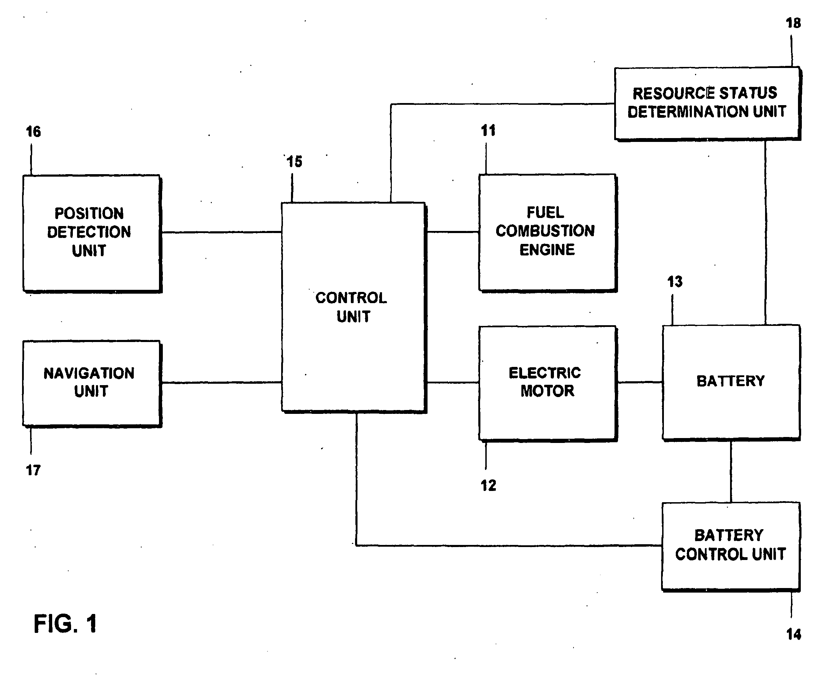

In Figure 1 a system is shown which can be used for effectively controlling a hybrid vehicle. The hybrid vehicle comprises a first driving mechanism, such as a fuel combustion engine 11. In addition to this fuel combustion engine an electric motor 12 may be provided. The electric motor is powered by a battery 13. The battery can be recharged during driving, e.g. when the brake of the vehicle is activated or by the fuel combustion engine. The latter can also help to recharge the battery 13. A battery control unit 14 is provided controlling the recharging and discharging of the battery. A resource determination unit 18 determines the resource status of the driving mechanism, in the present case the battery charge level of the battery 13. Additionally, a main control unit 15 is provided. The main control unit 15 either couples the fuel combustion engine or the electric motor to the drive wheels via a shaft not shown in Figure 1. Additionally, it is possible that the control unit couples both driving mechanisms 11 and 12 to the drive wheels. This situation may occur in acceleration situations where the use of the electric motor and the fuel combustion engine can improve the acceleration of the vehicle. Additionally, means 16 are provided for detecting the actual position of the vehicle. In the embodiment shown in Figure 1 a position detection unit 16 can detect the actual vehicle position. For this position detection GPS data may be used or that dead recoging systems taking into account other sensor signals of the vehicle. In addition to the position detection unit 16 a navigation unit 17 is provided, the navigation unit calculating a route to a predetermined destination location. Conventionally, a navigation unit bases its calculation on digital map data not shown in the figure. Navigation systems are widely used and well-known to the person skilled in the art, so that a detailed functional description of the navigation unit is omitted. Additionally, detailed aspects of the hybrid vehicle, e.g. aspects of how different driving mechanisms are coupled to the drive wheels are omitted for the sake of clarity. In the present context only the parts of the invention are described which are important for the understanding of this invention.

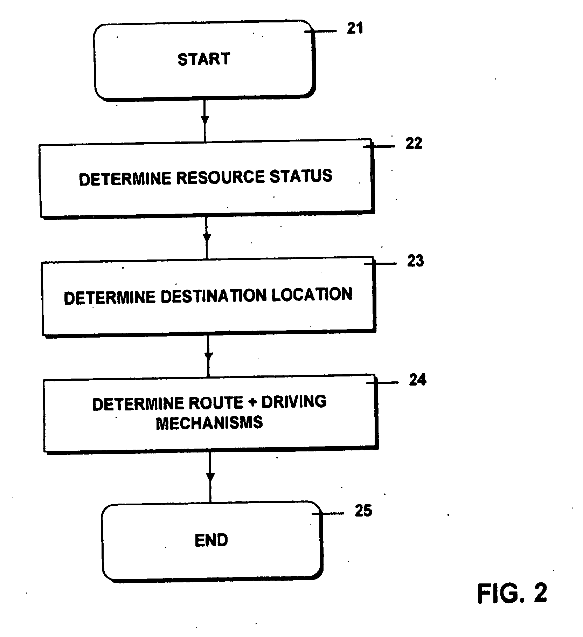

In connection with Fig. 2 it is now shown how the system of Figure 1 can determine a route for a hybrid vehicle. After the start of the process in step 21 the resource status for at least one of the driving mechanisms is determined. It should be understood that the resource status can also be determined for all driving mechanisms. However, in case of a hybrid vehicle using an electric motor and a fuel combustion engine, it will normally not be necessary to determine the fill level of the gasoline. In hybrid vehicles using an electric motor, the charge status of the battery is the crucial factor for determining how often and when the electric motor can be used. When the resource status has been determined in step 22 by the resource status determination unit 18 and when the destination location has been determined in step 23, it is then possible to determine a route and to determine the use of the different driving mechanisms for the route taking into account the resource status (step 24). Normally, the driving mechanisms are controlled in such a way that the fuel consumption of the fuel combustion engine 11 is minimized. It should be understood that other information about the route such as altitude change, road pattern or driving patterns of the driver can also be considered for determining the route and the use of the different driving mechanisms for the different parts of the route. However, according to an important aspect of the invention, the resource status is also determined. By way of example, when the fill status of the battery is low and there are two possible routes in order to arrive at the destination location, the route may be selected for which the elevation gradient is negative at the beginning, so that the battery can be recharged, then selecting the other possible route, the elevation gradient of which is positive for the beginning of the route. The flowchart of Figure 2 ends in step 25.

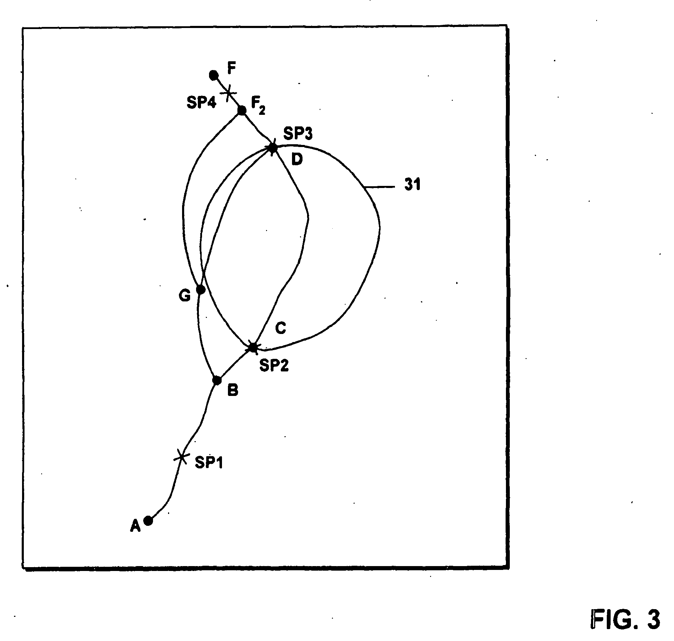

In Figure 3 another situation is shown in which the resource status of the driving mechanisms plays an important role when the route to a destination location has to be determined. In Figure 3 part of a map is shown in which the route from a starting point A to a destination location F is shown. The fastest route from location A to location F may be the route traveling along the map points ABCDEF. Now it may happen that there exists a driving mechanism constraint for part of the route, the driving mechanism constraint being shown by the encircled part 31. By way of example, this part of the map 31 can be a downtown area for which a smog alarm has been activated or for which the use of a fuel combustion engine is completely prohibited. This means that when the driver is using a hybrid vehicle having a fuel combustion engine and an electric motor as shown in Figure 1, the only driving mechanism which can be used within the area 31 is the electric motor. If it is known that for calculating the route from A to F, this driving mechanism constraint exists, the controller 15 can control a navigation unit 17 in such a way that, if possible, the energy level of the battery is high enough at location C for the vehicle to cross the area 31 from location C to location D. If, however, it is determined that in view of the present energy status of the battery it is not possible to drive from location C to location D only using the electric motor the system may determine the route in such a way that the vehicle travels along locations A, B, G, D, E, F. If it is determined that the resource status of the battery does not allow the use of the electric motor at all, the route has to be determined in such a way that the are 31 is not crossed at all, so that the route A, B, G, E, F will be selected. The driving mechanism constraint in area 31 needs not necessarily be a constraint. It is also possible that the user sets a preference indicating that he or she does not want to use one of the driving mechanisms in the area 31. In this case the control unit can also control the different driving mechanisms in such a way that, if possible, the crossing of the area 31 is possible with the preferred driving mechanism.

If it is known that a fuel combustion engine cannot be used within area 31, the system may also control the battery controller in such a way that the fuel combustion engine is used for the first part of the route from A to C and that, at the same time, the battery is recharged so that the charge status allows the crossing of area 31 only with the use of the electric motor. If this, however, is not possible, then the detour over location B, G and E has to be used. It is also possible that the vehicle receives the driving mechanism constraint via a radio receiver (e.g. the information about the driving mechanism constraint for a predetermined geographical region may be comprised in the traffic massage channel data). In this case the system can react by determining the resource status at the present location, by way of example somewhere between the locations A and B. The system can then react accordingly. When the system can be controlled in such a way that enough battery power will be provided at location C in order to cross the area 31, the navigation unit will continue guiding the driver through locations B, C, D and E. If not, the navigation system may change the route by going through locations B, G and D or E.

In addition to the route itself, the control unit controls which driving mechanism is used for which part of the route. By way of example, when determining the route, the switching points are determined at the same time. By way of example, when traveling from location A to destination location F, the vehicle may be controlled in such a way that, starting from A to switching point SP1, the vehicle is driven by the electric motor. At location SP1 the driving mechanism is changed to the fuel combustion engine between the locations SP1 and SP2. The controller knows that between SP2 and SP3 the electric motor has to be used. Accordingly, before entering geographical region 31, the vehicle is driven using the fuel combustion engine, so that the battery can be charged either by regenerative breaking or by the fuel combustion engine itself before entering region 31. Between locations SP2 and SP3 the vehicle uses the electric motor. At location SP3 the driving mechanism is again switched to the fuel combustion engine. At switching point SP4 the driving mechanism may be again switched to the electric motor, as the system knows that the destination location will be reached at location F. When the system knows that at location F a recharge possibility exists, the switching points will be determined in such a way that the battery can be discharged to a minimum level.

These switching points are determined in connection with the route determination. During driving, the system can verify whether the actual resource status corresponds to the predicted resource status. If this is not the case, the system can react accordingly and change the switching points taking into account the newly determined battery charge status.

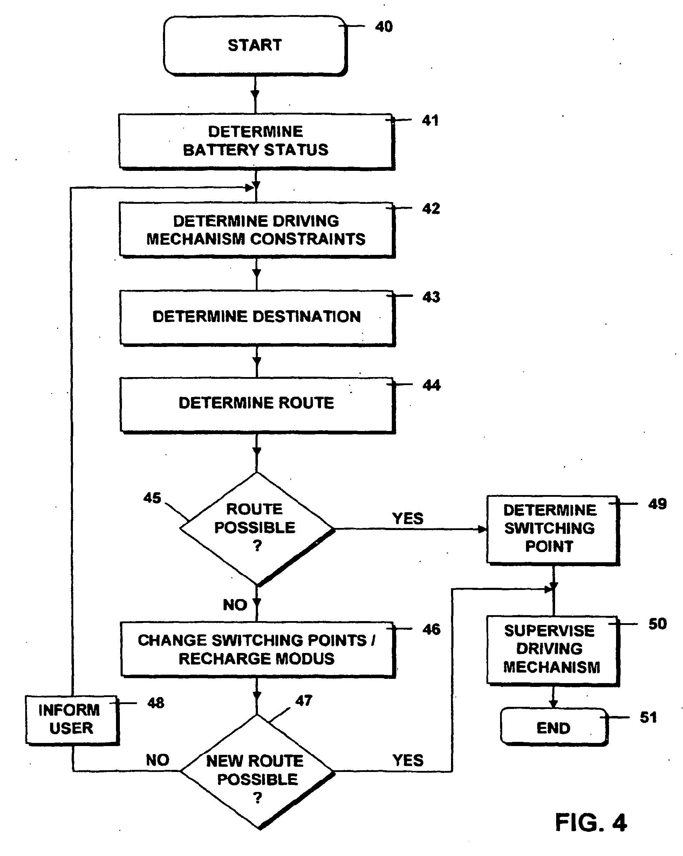

In Figure 4 a flow chart is shown describing in more detail the steps that are carried out when a driving mechanism constraint is known. The process starts in step 40. For determining the route, the battery status in case of an electric vehicle is determined in step 41. In addition to the battery status the driving mechanism constraints are determined in step 42. Before a route can be calculated, the destination has to be known for which a route should be calculated (step 43). When the battery status and the driving mechanism constraint are known, the route to the predetermined destination can be calculated in step 44. As described in connection with Figure 3, the system of the hybrid vehicle now has to determine whether the battery status at location B will allow the vehicle to travel through area 31 or not. In step 45 it is asked whether it is possible at all to calculate a route meeting the driving mechanism constraints. If no route can be found meeting the driving mechanism constraints in view of the determined battery status, the system can try at step 46 to change the switching points in such a way that the battery status will allow the crossing of an area having constraints only based on the electric motor. In step 47 it is then asked whether it is now possible to calculate a new route meeting the driving mechanism constraints. If it is again not possible, the system may inform the user in step 48 and the system will have to restart to calculate a new route perhaps by calculating a route completely avoiding the area where driving constraints exist.

If it was determined in step 45 that a route could be calculated meeting the driving mechanism constraints, the switching points can be determined and the vehicle can be guided along the proposed route. During driving, the battery status is verified in step 50. The system checks whether the current battery status depending on the position corresponds to the predicted battery status. If this is not the case, the system can recalculate the switching points in view of the actual battery status. If a route could be calculated in step 47 after changing the switching points meeting the driving mechanism constraints, the system also continues supervising the driving mechanism during driving. The process ends in step 51.

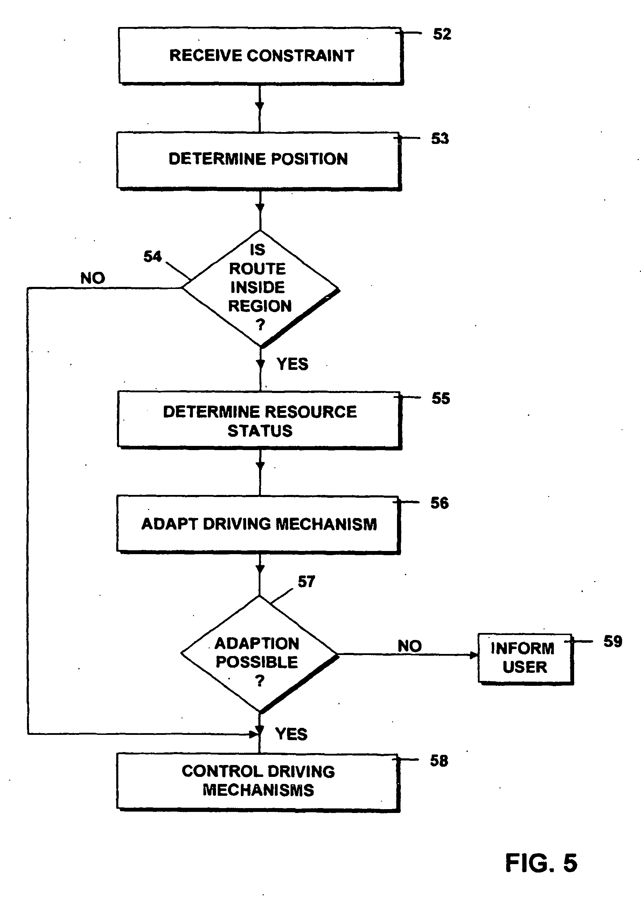

In Fig. 5 a situation is shown in which a vehicle during driving receives a driving mechanism constraint. By way of example, this driving mechanism constraints may be received using telecommunication networks and may be incorporated in a message received via a telecommunication unit of the vehicle. Furthermore, it is possible that the driving mechanism constraint is received in connection with a radio program. When such a driving mechanism constraint is received in step 52, the position of the vehicle is determined in step 53. It is then asked whether the actual position of the vehicle is inside the region in which the constraint applies. Additionally, it can be asked in step 54 whether a route to a destination will cross the region for which the constraint applies. If the vehicle inside the region or if the predicted route will pass the region for which the driving constraint exists, the resource status is determined in step 55. In the next step 56 the driving mechanism is adapted in such a way that the constraint will be met. When the vehicle is already inside the region having the constraint, the driving mechanism is adapted in such a way that the constraint will be met. If the vehicle will probably cross said region, the driving mechanisms will be controlled in such way that the driving mechanism meeting the constraint will have enough resources to drive the vehicle through said region. In step 57 it is asked whether the driving mechanism can be adapted in view of the new constraint situation. If this adaptation is possible, the driving mechanisms will be controlled accordingly in step 58. If the adaptation of the driving mechanisms is not possible in view of the resource status, the user will be informed in step 59 that, with the present route and the present resource status, the driving mechanism constraint can probably not be met.

It should be understood that the driver can also be informed after receiving the constraint in step 52, so that the driver knows that a change of the driving mechanisms might be necessary and that the energy control unit changes the driving mechanisms accordingly.

Summarizing, this invention provides a possibility to determine a route depending on the resource status of at least one driving mechanism of the vehicle. It should be understood that the resource status of all driving mechanisms can also be determined. However, it is also possible to detect the status of one driving mechanism only.

## Claims

1. Method for determining a route for a hybrid vehicle, the hybrid vehicle having at least two different mechanisms (11,12) for driving the vehicle, the method comprising the following steps:
- determining the resource status (22; 41; 55) of at least one of said at least two different driving mechanisms (11,12),
- determining a destination location (23; 43) for the vehicle,
- determining a route (24; 44) to said predetermined destination location and the use of the different driving mechanisms for said route in accordance with the determined resource status,
**characterized in that** the method further comprises the steps of
- determining the position of the vehicle (53),
- determining preferences and/or constraints (42) for the driving mechanism (11,12) for said vehicle position,
- automatically selecting the driving mechanism (11,12) in accordance with the driving mechanism constraints or preferences,
- determining (45,47) whether, in view of the resource status, a route can be calculated meeting the driving mechanism constraints or preferences, wherein the use of the different driving mechanisms is determined in such a way that, for a part of the route, for which a driving mechanism constraint is present, the driving mechanism for which no constraint exists can be used for said part of the route.

2. Method according to claim 1 wherein for determining the use of the different driving mechanisms it is determined which driving mechanism is used for the different parts of the route and the switching locations for changing the driving mechanism are determined.

3. Method according to claim 1 or 2, wherein the driving mechanisms (11,12) are selected from the following mechanisms: gasoline, diesel, gas engine, electric motor, or hydrogen driven motor.

4. Method according to any of the preceding claims, wherein the resource status is determined at least for a driving mechanism (12) which is not combusting fossil fuels.

5. Method according to any of the preceding claims, wherein one driving mechanism is an electric motor (12), the step of determining the resource status comprises the step of determining the charge status of a battery (13) storing the electric energy for the electric motor (12).

6. Method according to any of the preceding claims **characterized by** further comprising the step of determining driving mechanism preferences for certain geographical regions, the route to said predetermined destination and the use of the different driving mechanisms being determined taking into account the driving mechanism preferences.

7. Method according to any of the preceding claims **characterized by** further comprising the step of determining driving mechanism constraints (42) for certain geographical regions, the route to said predetermined destination and the use of the different driving mechanisms being determined taking into account the driving mechanism constraints.

8. Method according to any of the preceding claims **characterized by** further comprising the steps of
- determining the position (53) of the vehicle,
- determining preferences and/or constraints (42) for the driving mechanism (1, 12) for said vehicle position,
- informing the user of the vehicle of possible driving mechanism (11,12) preferences or constraints.

9. Method according to any of the preceding claims, **characterized by** further comprising the step of determining a minimum resource level for at least one of the different driving mechanisms (11,12), wherein the use of the different driving mechanisms (11,12) and the switching locations for the determined route is determined in such a way, that the resource level for said at least one driving mechanism (11,12) does not fall under the minimum resource level.

10. Method according to any of the preceding claims, **characterized by** further comprising the step of predicting the resource status for the different parts of the route, wherein during driving it is verified, whether, depending on the position, the resource status differs from the predicted resource status by a predetermined amount.

11. Method according to claim 10, **characterized in that** the use of the different driving mechanisms (11,12) and the switching locations are recalculated for the remaining route, if the resource status differs from the predicted resource status by a predetermined amount.

12. Method according to any of the preceding claims, **characterized by** further comprising the steps of determining traffic information for the determined route and controlling the driving mechanisms of the hybrid vehicle for said determined route taking into account the traffic information.

13. Method according to any of claims 7 or 8, wherein the driving constraints are received via a wireless communication unit.

14. Method according to any of the preceding claims **characterized by** further comprising the step of determining a preset condition for the route determination, the route to said predetermined destination location being calculated in accordance with said preset condition.

15. Method according to any of the preceding claims **characterized by** further comprising the step of verifying whether, at the destination location there exists a possibility of refilling the resource for at least one of the driving mechanisms, the route and the use of the different driving mechanisms (11,12) being calculated in accordance with said verification.

16. Method according to any of claims 2 to 15, **characterized in that** the driving mechanisms (11,12) are controlled in such a way for the determined route that the fuel consumption for a fossil fuel is minimized.

17. System for controlling a hybrid vehicle, the hybrid vehicle having at least two different driving mechanisms (11,12), comprising:
- a resource determination unit (18) for determining the resource status of at least one of said at least two different driving mechanisms (11,12),
- a position detecting unit (16) for calculating the present position of the vehicle,
- a route determination unit (17) for determining the route to a predetermined destination location, and
- a driving mechanism control unit (15) determining the use of the different driving mechanisms (11,12) and the switching locations for changing the driving mechanism status for said route in accordance with the determined resource status, **characterized in that** the system is adapted to perform the method according to any of claims 1 to 16.

18. System according to claim 17, **characterized in that** the hybrid vehicle has at least one of the following driving mechanisms (11, 12): a fuel combustion motor, an electric motor (12), and a hydrogen driven motor.

## Patentansprüche

1. Verfahren zum Bestimmen einer Route für ein Hybridfahrzeug, wobei das Hybridfahrzeug mindestens zwei unterschiedliche Mechanismen (11, 12) zum Antreiben des Fahrzeugs aufweist, wobei das Verfahren die folgenden Schritte umfasst:
- Bestimmen des Betriebsmittelstatus (22; 41; 55) von mindestens einem der mindestens zwei unterschiedlichen Antriebsmechanismen (11, 12),
- Bestimmen eines Zielorts (23; 43) für das Fahrzeug,
- Bestimmen einer Route (24; 44) zu dem vorbestimmten Zielort und die Verwendung der unterschiedlichen Antriebsmechanismen für die Route gemäß dem bestimmten Betriebsmittelstatus,
**dadurch gekennzeichnet, dass** das Verfahren ferner die Schritte umfasst:
- Bestimmen der Position des Fahrzeugs (53),
- Bestimmen von Präferenzen und/oder Beschränkungen (42) für den Antriebsmechanismus (11, 12) der Fahrzeugposition,
- automatisches Auswählen des Antriebsmechanismus (11, 12) gemäß den Antriebsmechanismusbeschränkungen oder Antriebsmechanismuspräferenzen,
- Bestimmen (45, 47), ob in Anbetracht des Betriebsmittelstatus eine Route berechnet werden kann, welche die Antriebsmechanismusbeschränkungen oder Antriebsmechanismuspräferenzen erfüllt,
wobei die Verwendung der unterschiedlichen Antriebsmechanismen in einer derartigen Art und Weise bestimmt wird, dass für einen Teil der Route, für welchen eine Antriebsmechanismusbeschränkung vorhanden ist, der Antriebsmechanismus, für welchen keine Beschränkung besteht, für den Teil der Route verwendet werden kann.

2. Verfahren nach Anspruch 1, wobei zum Bestimmen der Verwendung der unterschiedlichen Antriebsmechanismen bestimmt wird, welcher Antriebsmechanismus für unterschiedliche Teile der Route verwendet wird, und die Schaltorte für ein Ändern des Antriebsmechanismus bestimmt werden.

3. Verfahren nach Anspruch 1 oder 2, wobei die Antriebsmechanismen (11, 12) aus den folgenden Mechanismen ausgewählt werden: Benzinantrieb, Dieselantrieb, Gasantrieb, elektrischer Motor oder Wasserstoff angetriebener Motor.

4. Verfahren nach einem der vorhergehenden Ansprüche, wobei der Betriebsmittelstatus zumindest für einen Antriebsmechanismus (12) bestimmt wird, welcher keine fossilen Treibstoffe verbrennt.

5. Verfahren nach einem der vorhergehenden Ansprüche, wobei ein Antriebsmechanismus ein elektrischer Motor (12) ist, wobei der Schritt des Bestimmens des Betriebsmittelstatus den Schritt eines Bestimmens des Ladezustandes einer Batterie (13), welche die elektrische Energie für den elektrischen Motor (12) speichert, umfasst.

6. Verfahren nach einem der vorhergehenden Ansprüche, **dadurch gekennzeichnet, dass** das Verfahren ferner den Schritt eines Bestimmens von Antriebsmechanismuspräferenzen für bestimmte geographische Regionen umfasst, wobei die Route zu dem vorbestimmten Ziel und die Verwendung von den unterschiedlichen Antriebsmechanismen unter Berücksichtigung der Antriebsmechanismuspräferenzen bestimmt werden.

7. Verfahren nach einem der vorhergehenden Ansprüche, **dadurch gekennzeichnet, dass** das Verfahren ferner den Schritt eines Bestimmens von Antriebsmechanismusbeschränkungen (42) für bestimmte geographische Regionen umfasst, wobei die Route zu dem vorbestimmten Ziel und die Verwendung der unterschiedlichen Antriebsmechanismen unter Berücksichtigung der Antriebsmechanismusbeschränkungen bestimmt wird.

8. Verfahren nach einem der vorhergehenden Ansprüche, **dadurch gekennzeichnet, dass** das Verfahren ferner die Schritte umfasst:
- Bestimmen der Position (53) des Fahrzeugs,
- Bestimmen von Präferenzen und/oder Beschränkungen (42) für den Antriebsmechanismus (11, 12) für die Fahrzeugposition,
- Informieren des Benutzers des Fahrzeugs über mögliche Präferenzen oder Beschränkungen für den Antriebsmechanismus (11, 12).

9. Verfahren nach einem der vorhergehenden Ansprüche, **dadurch gekennzeichnet, dass** das Verfahren ferner den Schritt eines Bestimmens eines minimalen Betriebsmittelpegels für mindestens einen der unterschiedlichen Antriebsmechanismen (11, 12) umfasst, wobei die Verwendung der unterschiedlichen Antriebsmechanismen (11, 12) und die Schaltorte für die bestimmte Route auf eine derartige Art und Weise bestimmt werden, dass der Betriebsmittelpegel für den mindestens einen Antriebsmechanismus (11, 12) nicht unter den minimalen Betriebsmittelpegel fällt.

10. Verfahren nach einem der vorhergehenden Ansprüche, **dadurch gekennzeichnet, dass** das Verfahren ferner den Schritt eines Vorhersagens des Betriebsmittelstatus für die unterschiedlichen Teile der Route umfasst, wobei während einer Fahrt überprüft wird, ob in Abhängigkeit der Position der Betriebsmittelstatus von dem vorhergesagten Betriebsmittelstatus um einen vorbestimmten Betrag abweicht.

11. Verfahren nach Anspruch 10, **dadurch gekennzeichnet, dass** die Verwendung der unterschiedlichen Antriebsmechanismen (11, 12) und die Schaltorte für die übrige Route neu berechnet werden, wenn der Betriebsmittelstatus von dem vorhergesagten Betriebsmittelstatus um einen vorbestimmten Betrag abweicht.

12. Verfahren nach einem der vorhergehenden Ansprüche, **dadurch gekennzeichnet, dass** das Verfahren ferner die Schritte umfasst:
- Bestimmen einer Verkehrsinformation für die vorbestimmte Route, und
- Steuern der Antriebsmechanismen für das Hybridfahrzeug für die bestimmte Route unter Berücksichtigung der Verkehrsinformation.

13. Verfahren nach einem der Ansprüche 7 oder 8, wobei die Antriebsbeschränkungen über eine drahtlose Kommunikationseinheit empfangen werden.

14. Verfahren nach einem der vorhergehenden Ansprüche, **dadurch gekennzeichnet, dass** das Verfahren ferner den Schritt eines Bestimmens einer voreingestellten Bedingung für die Routenbestimmung umfasst, wobei die Route zu dem vorbestimmten Zielort gemäß der voreingestellten Bedingung berechnet wird.

15. Verfahren nach einem der vorhergehenden Ansprüche, **dadurch gekennzeichnet, dass** das Verfahren ferner den Schritt eines Prüfens, ob an dem Zielort eine Möglichkeit eines Auffüllens des Betriebsmittels für mindestens einen der Antriebsmechanismen besteht, umfasst, wobei die Route und die Verwendung der unterschiedlichen Antriebsmechanismen (11, 12) gemäß der Prüfung berechnet wird.

16. Verfahren nach einem der Ansprüche 2 bis 15, **dadurch gekennzeichnet, dass** die Antriebsmechanismen (11, 12) in einer derartigen Art und Weise für die vorbestimmte Route gesteuert werden, dass der Treibstoffverbrauch für einen fossilen Treibstoff minimiert wird.

17. System zum Steuern eines Hybridfahrzeugs, wobei das Hybridfahrzeug mindestens zwei unterschiedliche Antriebsmechanismen (11, 12) umfasst, wobei das System umfasst:
- eine Betriebsmittelbestimmungseinheit (18) zum Bestimmen des Betriebsmittelstatus von mindestens einem der mindestens zwei unterschiedlichen Antriebsmechanismen (11, 12),
- eine Positionserfassungseinheit (16) zum Berechnen der gegenwärtigen Position des Fahrzeugs,
- eine Routenbestimmungseinheit (17) zum Bestimmen der Route zu einem vorbestimmten Zielort, und
- eine Antriebsmechanismussteuereinheit (15), welche die Verwendung der unterschiedlichen Antriebsmechanismen (11, 12) und die Schaltorte zum Ändern des Antriebsmechanismusstatus für die Route gemäß dem vorbestimmten Betriebsmittelstatus bestimmt, **dadurch gekennzeichnet, dass** das System ausgestaltet ist, das Verfahren nach einem der Ansprüche 1 bis 16 auszuführen.

18. System nach Anspruch 17, **dadurch gekennzeichnet, dass** das Hybridfahrzeug mindestens einen der folgenden Antriebsmechanismen (11, 12) aufweist: einen Treibstoffverbrennungsmotor, einen elektrischen Motor (12) und einen Wasserstoff angetriebenen Motor.

## Revendications

1. Procédé de détermination d'itinéraire pour un véhicule hybride, le véhicule hybride comportant au moins deux systèmes (11, 12) différents pour la propulsion du véhicule, le procédé comprenant les étapes suivantes de:
- déterminer l'état de ressource (22; 41; 55) d'au moins l'un des deux systèmes de propulsion (11, 12) différents,
- déterminer un lieu de destination (23; 43) du véhicule,
- déterminer un itinéraire (24; 44) vers ledit lieu de destination prédéterminé et l'utilisation des systèmes de propulsion différents pour ledit itinéraire selon l'état de ressource déterminé,
**caractérisé en ce que** le procédé comprend en outre les étapes de
- déterminer la position du véhicule (53),
- déterminer des préférences et/ou contraintes (42) de système de propulsion (11, 12) pour ladite position de véhicule,
- sélectionner automatiquement le système de propulsion (11, 12) selon les contraintes ou préférences du système de propulsion,
- déterminer (45, 47) si, en vue de l'état de ressource, on peut calculer un itinéraire correspondant aux contraintes ou préférences de système de propulsion, l'utilisation des systèmes de propulsion différents étant déterminée de telle sorte que, pour un tronçon de l'itinéraire, pour lequel il y a une contrainte de système de propulsion, le système de propulsion pour lequel il n'y a pas de contrainte peut être utilisé pour ledit tronçon de l'itinéraire.

2. Procédé selon la revendication 1, dans lequel, pour déterminer l'utilisation des systèmes de propulsion différents, il est déterminé lequel des systèmes de propulsion est utilisé pour les différents tronçons de l'itinéraire, et les lieux de commutation pour changer de système de propulsion sont déterminés.

3. Procédé selon la revendication 1 ou 2, dans lequel les systèmes de propulsion (11, 12) sont sélectionnés parmi les systèmes suivants: essence, diésel, moteur à gaz, moteur électrique, ou moteur fonctionnant à l'hydrogène.

4. Procédé selon l'une quelconque des revendications précédentes, dans lequel l'état de ressource est déterminé au moins pour un système de propulsion (12) ne brûlant pas des combustibles fossiles.

5. Procédé selon l'une quelconque des revendications précédentes, dans lequel, un système de propulsion étant un moteur électrique (12), l'étape de déterminer l'état de ressource comprend l'étape de déterminer l'état de charge d'une batterie (13) stockant l'énergie électrique pour le moteur électrique (12).

6. Procédé selon l'une quelconque des revendications précédentes, **caractérisé en ce qu'**il comprend en outre l'étape de déterminer des préférences de système de propulsion pour certaines régions géographiques, l'itinéraire vers ledit lieu de destination prédéterminé et l'utilisation des systèmes de propulsion différents étant déterminés en tenant compte des préférences de système de propulsion.

7. Procédé selon l'une quelconque des revendications précédentes, **caractérisé en ce qu'**il comprend en outre l'étape de déterminer des contraintes de système de propulsion (42) pour certaines régions géographiques, l'itinéraire vers ledit lieu de destination prédéterminé et l'utilisation des systèmes de propulsion différents étant déterminés en tenant en compte des contraintes de système de propulsion.

8. Procédé selon l'une quelconque des revendications précédentes, **caractérisé en ce qu'**il comprend en outre les étapes de
- déterminer la position (53) du véhicule,
- déterminer les préférences et/ou contraintes (42) de système de propulsion (11, 12) pour ladite position du véhicule,
- informer l'utilisateur du véhicule d'éventuelles préférences ou contraintes de système de propulsion (11, 12).

9. Procédé selon l'une quelconque des revendications précédentes, **caractérisé en ce qu'**il comprend en outre l'étape de déterminer un niveau minimum de ressource pour au moins un des systèmes de propulsion (11, 12) différents, l'utilisation des systèmes de propulsion (11, 12) différents et des lieux de commutation pour l'itinéraire déterminé étant déterminés de telle sorte que le niveau de ressource pour ledit au moins un système de propulsion (11, 12) ne tombe pas en dessous du niveau minimum de ressource.

10. Procédé selon l'une quelconque des revendications précédentes, **caractérisé en ce qu'**il comprend en outre l'étape de prédire l'état de ressource pour les différents tronçons de l'itinéraire, dans lequel on vérifie en cours de route si, en fonction de la position, l'état de ressource diffère par un montant prédéterminé de l'état de ressource prédit.

11. Procédé selon la revendication 10, **caractérisé en ce que** l'utilisation des systèmes de propulsion (11, 12) différents et les lieux de commutation sont recalculés pour l'itinéraire restant, si l'état de ressource diffère par un montant prédéterminé de l'état de ressource prédit.

12. Procédé selon l'une quelconque des revendications précédentes, **caractérisé en ce qu'**il comprend en outre les étapes de déterminer une information routière pour l'itinéraire déterminé et de commander les systèmes de propulsion du véhicule hybride pour ledit itinéraire déterminé en tenant en compte de l'information routière.

13. Procédé selon l'une des revendications 7 ou 8, dans lequel les contraintes de propulsion sont reçues par l'intermédiaire d'une unité de communication sans fil.

14. Procédé selon l'une quelconque des revendications précédentes, **caractérisé en ce qu'**il comprend en outre l'étape de déterminer une condition préétablie pour la détermination d'itinéraire, l'itinéraire vers ledit lieu de destination étant calculé conformément à ladite condition préétablie.

15. Procédé selon l'une quelconque des revendications précédentes, **caractérisé en ce qu'**il comprend en outre l'étape de vérifier si, au lieu de destination, il existe une possibilité de remplir la ressource pour au moins un des systèmes de propulsion, l'itinéraire et l'utilisation des systèmes de propulsion (11, 12) différents étant calculés conformément à ladite vérification.

16. Procédé selon l'une des revendications 2 à 15,
**caractérisé en ce que** les systèmes de propulsion (11, 12) sont commandés pour l'itinéraire déterminé de telle sorte que la consommation de combustible pour un combustible fossile est minimisée.

17. Système pour commander un véhicule hybride, le véhicule hybride comportant au moins deux systèmes de propulsion (11, 12) différents, comprenant:
- une unité de détermination de ressource (18) pour déterminer l'état de ressource d'un moins un desdits au moins deux systèmes de propulsion (11, 12) différents,
- une unité de détection de position (16) pour calculer la position actuelle du véhicule,
- une unité de détermination d'itinéraire (17) pour déterminer l'itinéraire vers un lieu de destination prédéterminé, et
- une unité de commande de système de propulsion (15) déterminant l'utilisation des systèmes de propulsion (11, 12) différents et les lieux de commutation pour changer l'état de système de propulsion pour ledit itinéraire selon l'état de ressource déterminé, **caractérisé en ce que** le système est adapté pour exécuter le procédé selon l'une quelconque des revendications 1 à 16.

18. Système selon la revendication 17, **caractérisé en ce que** le véhicule hybride comporte au moins deux des systèmes de propulsion (11, 12) suivants: un moteur à combustion interne, un moteur électrique (12), et un moteur fonctionnant à l'hydrogène.
